# NOUVEAU FASCICULE DE BREVET EUROPEEN

(11) **EP 0 236 212 B2**
(45) Date de publication et mention de la décision concernant l'opposition: **24.11.1993**
(45) Mention de la délivrance du brevet: 13.06.1990
(21) Numéro de dépôt: 87400365.0
(22) Date de dépôt: 19.02.1987
(51) Int. Cl.: B60K 37/00

(54) **ensemble pour tableau de bord de véhicule automobile, à cadran et pièce conductrice de lumière, ainsi que dispositif support d'appareils indicateurs sur la pièce conductrice de lumière**
Armaturenbrett für Kraftfahrzeuge mit Lichtleitplatte und Halterungseinrichtung für Anzeigeinstrumente darauf
Vehicle instrument panel with conducting light piece and device for mounting indicating instruments thereon

(30) Priorité: 21.02.1986 FR 8602422
(43) Date de publication de la demande: 09.09.1987
(73) Titulaire: JAEGER, F-92303 Levallois-Perret (FR)
(72) Inventeur: Lazareff, André, F-92110 Clichy (FR); Sadat, Idir, F-95870 Bezons (FR)
(74) Mandataire: Martin, Jean-Jacques

(56) Documents cités:
- DE-U- 1 673 395
- DE-U- 6 935 892
- GB-A- 1 026 887
- US-A- 2 507 035
- US-A- 3 116 711
- Revue Technique Automobile No 446 (Juillet-Aout 1984), page 69

## Description

La présente invention concerne le domaine des tableaux de bord de véhicules automobiles.

Plus précisément, la présente invention concerne un ensemble pour tableau de bord de véhicules automobiles, à cadran et pièce conductrice de lumière, ainsi que des moyens supports d'appareils indicateurs sur la face arrière de cette pièce conductrice de lumière.

Les tableaux de bord classiques de véhicules automobiles comprennent le plus souvent un cadre en matériau opaque qui porte différents témoins de visualisation et supporte sur sa face arrière des appareils indicateurs, tels que odomètre, compteur de vitesse, compte tours et mouvement d'horlogerie. Le plus souvent, les appareils indicateurs sont équipés d'un cadran respectivement associé et d'une pièce conductrice de lumière respective, en matériau transparent, intercalée entre chaque appareil indicateur et le cadran associé précité.

Le document GB-A-1026887 décrit un élément de tableau de bord pour véhicule automobile. Cet élément comprend une structure en forme de boîte composée d'une paroi de fond et de parois latérales. La structure de boîte est fermée par un panneau avant amovible. Celui-ci est fixé sur les parois latérales de la boîte, par des vis. Le panneau avant peut être formé d'un matériau transparent rendu opaque par un revêtement de peinture sauf en regard d'instruments placés dans la boîte. Ces instruments sont supportés par des voiles ou nervures solidaires de la paroi de fond. Un circuit imprimé peut être placé sur la face externe de cette paroi de fond.

La Demanderesse a elle-même commercialisé en 1984 des ensembles pour tableaux de bord illustrés dans la Revue Technique Automobile Juillet/Août 1984, n° 446, p. 69. Ces ensembles comprennent un boîtier, un circuit imprimé porté par la face arrière du boîtier, un cadre en matériau opaque placé sur la face avant du boîtier, un premier jeu d'appareils indicateurs comportant un tachymètre et un indicateur de température de liquide de refroidissement, une première pièce conductrice de lumière supportant le premier jeu d'appareils indicateurs sur sa face arrière grâce à des vis, un premier cadran comportant des plages translucides colorées et des symboles colorés placé devant la première pièce conductrice de lumière, un second jeu d'appareils indicateurs comportant un compte-tours et un indicateur de pression d'huile moteur, une seconde pièce conductrice de lumière supportant le second jeu d'appareils indicateurs sur sa face arrière grâce à des vis, un second cadran placé devant la seconde pièce conductrice de lumière, et une visière qui recouvre les deux cadrans.

La présente invention a maintenant pour but de perfectionner les ensembles à cadran et pièce conductrice de lumière.

La présente invention a en particulier pour but de proposer de tels ensembles pour tableaux de bord de véhicules automobiles qui soient plus robustes, plus économiques et surtout d'assemblage plus facile que les ensembles jusqu'ici proposés.

Le problème ainsi posé est résolu dans le cadre de la présente invention grâce aux caractéristiques mentionnées en revendication 1.

L'homme de l'art comprendra aisément que l'utilisation d'une pièce conductrice de lumière unique facilite largement l'assemblage des ensembles pour tableaux de bord, et permet par ailleurs de définir une fixation des appareils indicateurs plus robuste et en particulier moins sensible aux vibrations que les réalisations antérieurement proposées.

L'ensemble pour tableaux de bord de véhicules automobiles conforme à la présente invention comprend de plus, de préférence, des brides en U adaptées pour venir en prise, d'une part, avec le corps des appareils indicateurs, d'autre part, avec des circuits imprimés servant à l'alimentation électrique des appareils indicateurs, pour définir un montage flottant des circuits sur les appareils indicateurs.

Lesdites brides en U comprennent avantageusement sur la surface interne de leur âme, un téton venant en prise avec le corps des appareils indicateurs, et sur l'extrémité libre de leurs ailes, des dents venant en liaison d'encliquetage avec les circuits imprimés.

Selon un mode de réalisation conforme à la présente invention, chaque étrier adapté pour fixer un appareil indicateur sur la face arrière de la pièce conductrice de lumière a avantageusement la forme d'un U et possède des crochets sur l'extrémité libre de ses ailes, adaptés pour venir en prise avec des structures associées solidaires de la face arrière de la piece conductrice de lumière, pour définir un ancrage deux points des appareils indicateurs.

Selon une autre caractéristique de la présente invention, chaque cavalier adapté pour fixer d'autres appareils indicateurs sur la face arrière de la pièce conductrice de lumière, a avantageusement la forme d'un U et est adapté pour venir s'accrocher, par les extrémités libres de ses ailes, sur des structures associées solidaires de la face arrière de la pièce conductrice de lumière, et est muni par ailleurs d'une dent sur son âme, ladite dent étant conçue pour venir en prise avec une troisième structure afin de définir un ancrage trois points, des appareils indicateurs.

D'autres caractéristiques, buts et avantages de la présente invention apparaîtront à la lecture de la description détaillée qui va suivre et en regard des dessins annexés donnés à titre d'exemple non limitatif et sur lesquels.:
- la figure 1 représente une vue schématique en vue éclatée d'un ensemble pour tableaux de bord de véhicules automobiles conforme à la présente invention comprenant en combinaison une pièce conductrice de lumière, un cadre opaque et un cadran,
- la figure 2 représente une vue de la face arrière d'une pièce conductrice de lumière conforme à la présente invention,
- la figure 3 représente une vue de détail en coupe, selon un plan de coupe référencé III-III sur la figure 2, de la même pièce conductrice de lumière,
- la figure 4 représente une vue de dessus des structures en saillie sur la face arrière de la pièce conductrice de lumière et adaptées pour recevoir un cavalier définissant un ancrage trois points, d'un appareil indicateur,
- la figure 5 représente une vue en coupe des mêmes structures, selon des plans de coupe non coplanaires référencés V-V sur la figure 4,
- les figures 6 et 7 représentent des vues respectivement de dessus et latérale d'un cavalier conforme à la présente invention, définissant un ancrage trois points d'un appareil indicateur,
- la figure 8 représente une vue latérale d'un étrier conforme à la présente invention définissant un ancrage deux points d'un appareil indicateur,
- la figure 9 représente une vue en coupe, selon un plan de coupe référencé IX-IX sur la figure 2 des structures en saillie sur la face arrière de la pièce conductrice de lumière adaptées pour recevoir l'étrier,
- la figure 10 représente une vue latérale d'une bride conforme à la présente invention adaptée pour définir un montage flottant de circuits imprimés sur un appareil indicateur, et
- la figure 11 représente schématiquement l'assemblage d'un circuit imprimé sur un appareil indicateur à l'aide d'une telle bride.

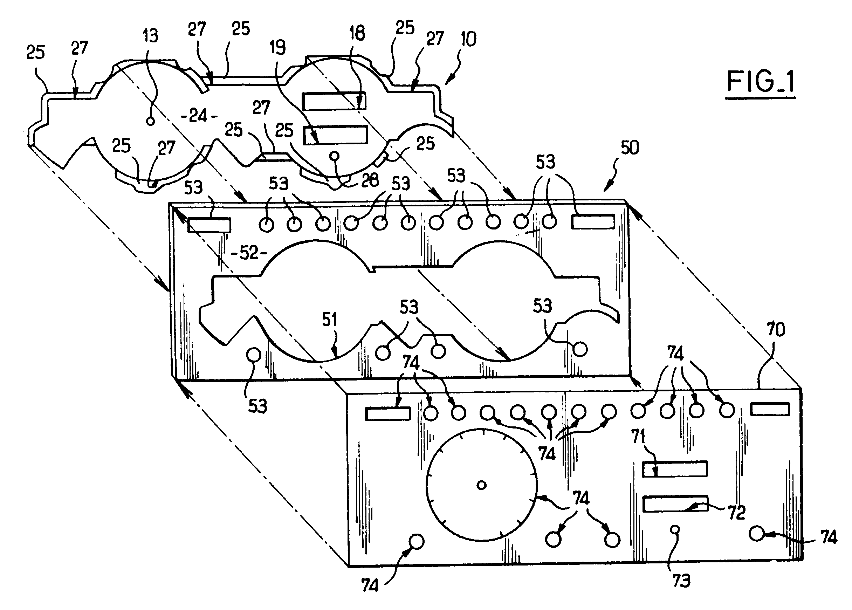

On aperçoit sur la figure 1 annexée un ensemble pour tableau de bord de véhicule automobile conforme à la présente invention comprenant en combinaison une pièce conductrice de lumière 10, un cadre en matériau opaque 50 et un cadran 70.

La pièce conductrice de lumière 10 destinée à être intercalée entre les appareils indicateurs (non représentés sur les figures pour simplifier l'illustration) et le cadran 70 est formée d'une seule pièce, généralement plane, en matière plastique transparente. La pièce conductrice de lumière 10 est ainsi avantageusement réalisée en polyméthacrylate de méthyle.

La face arrière de la pièce conductrice de lumière 10 est munie d'une pluralité de prismes 12 venus de moulage coopérant de façon classique en soi avec des sources lumineuses (non représentées sur les figures pour simplifier l'illustration).

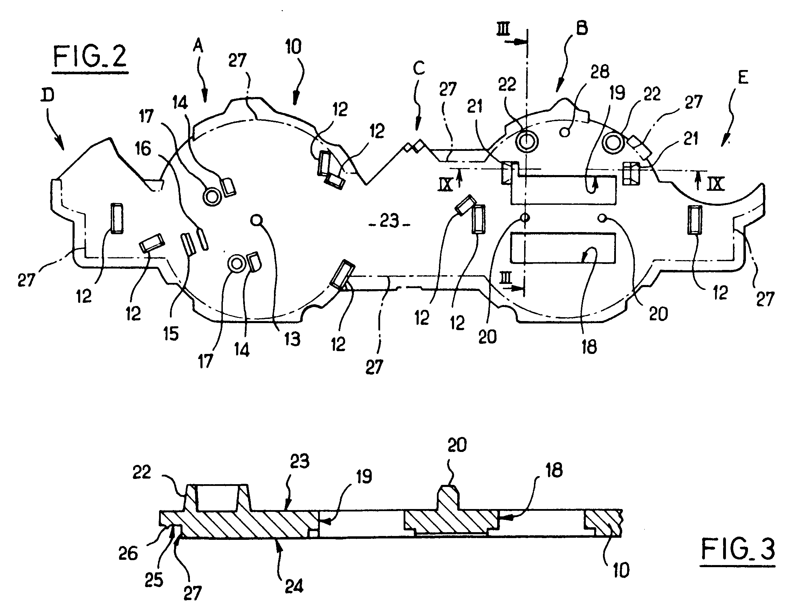

Pour l'essentiel, la pièce conductrice de lumière 10 représentée sur la figure 2 comprend deux zones A, B de contour général circulaire reliées entre elles par une zone centrale médiane C et prolongées respectivement de part et d'autre, à l'opposé de la zone C par des zones D, E.

La zone A est adaptée pour recevoir un appareil afficheur type compteur de vitesse tandis que la zone B est adaptée pour recevoir un appareil afficheur type odomètre partiel et odomètre général.

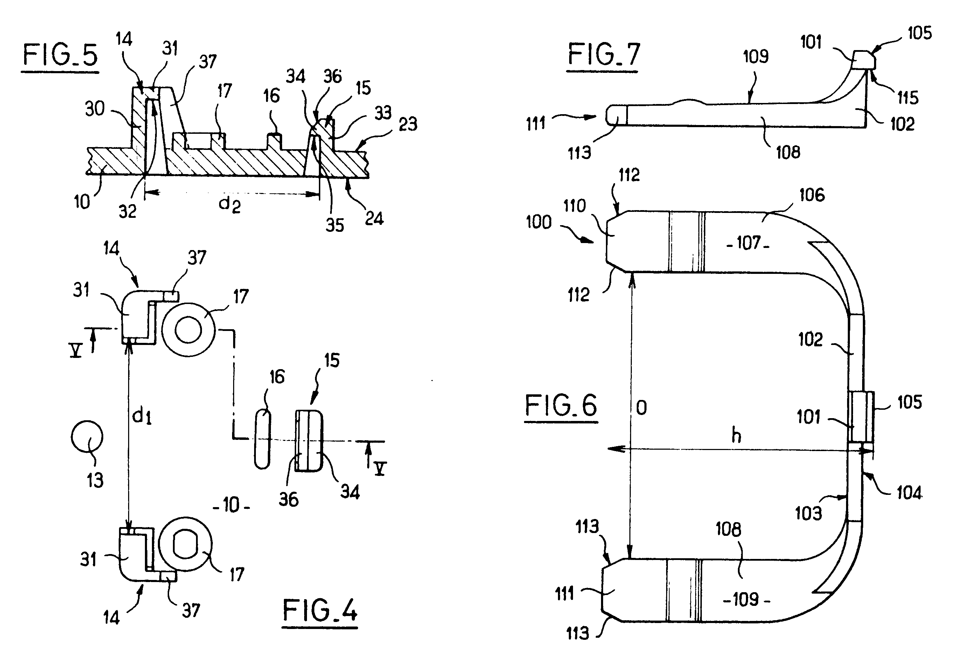

A cette fin, la pièce conductrice 10 est munie au centre de la zone A d'un orifice 13 destiné à recevoir en traversée l'axe de sortie de l'appareil afficheur indicateur de vitesse. Cet appareil est maintenu sur la face arrière de la pièce conductrice de lumière 10 en regard de la zone A grâce à un cavalier illustré sur les figues 6 et 7 venant en prise avec une paire de saillies 14 et une saillie 15 (représentées en détail sur les figures 4 et 5) venues de moulage sur la face arrière de la pièce 10.

On remarquera par ailleurs la présence sur la zone A de deux nervures cylindriques 17 adjacentes aux saillies 14 et une nervure rectiligne 15 adjacente à la saillie 15. La disposition et le rôle des éléments 14, 15, 16 et 17 seront décrits plus en détail par la suite en regard des figures 4 et 5. On notera néanmoins dès à présent que les nervures cylindriques 17 sont destinées à recevoir des tétons solidaires de l'appareil indicateur devant être supporté sur la zone A, pour renforcer l'immobilisation de celuici, tandis que la nervure rectiligne 16 est destinée à coopérer avec la structure 15 pour assurer l'accrochage du cavalier.

Sur la zone B de la pièce optique 10 on remarquera la présence de deux fenêtres généralement rectangulaires et parallèles, 18 et 19.

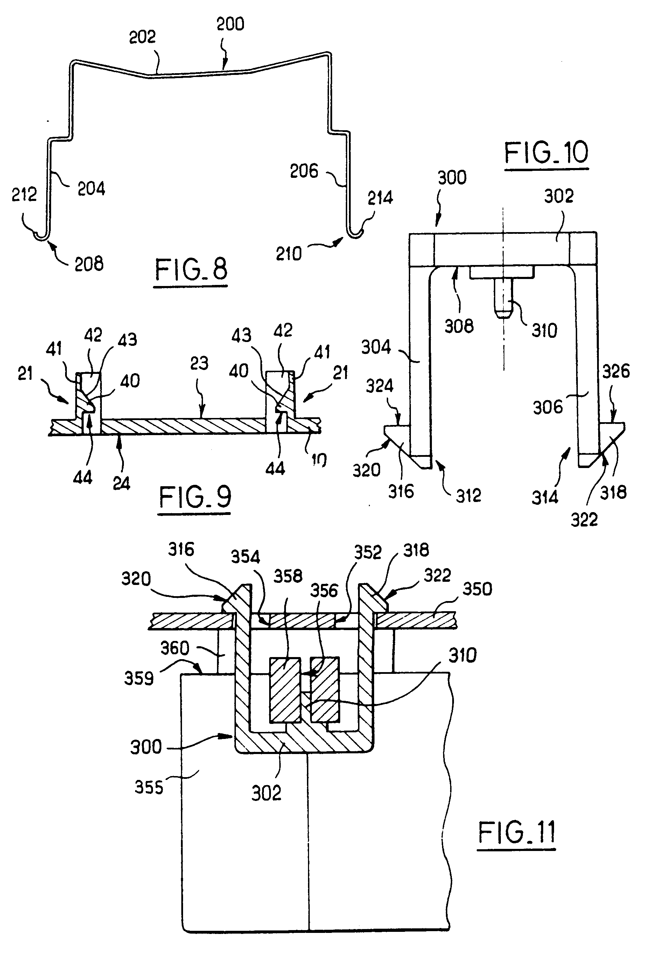

La pièce 10 est de plus munie sur sa face arrière, au niveau de la zone B de deux structures en saillie 21, disposées de part et d'autre de la fenêtre 19 et destinées à recevoir un étrier représenté sur la figure 8 pour immobiliser un appareil indicateur du type odomètre partiel et odomètre général en regard des fenêtres 19 et 18.

Les structures 21 et 22 sont décrites plus en détail par la suite en regard de la figure 9.

On notera enfin la présence en bordure de la zone B de deux nervures cylindriques 22, et entre les fenêtres 18 et 19 de deux ergots 20.

Ces éléments sont là encore destinés à faciliter le positionnement de l'appareil indicateur sur la face arrière de la pièce 10 au niveau de la zone B, tout en renforçant l'immobilisation dudit appareil. Pour cela, de façon comparable aux nervures 17 précitées, les nervures cylindriques 22 sont destinées à recevoir des tétons solidaires de l'appareil indicateur, tandis que les ergots 20 sont destinés à pénétrer dans des logements respectivement associés ménagés sur ledit appareil.

Sur la figure 3 qui représente une vue partielle en coupe de la pièce conductrice de lumière 10, la face arrière de cette pièce est référencée 23 tandis que la face avant est référencée 24.

On aperçoit sur cette figure 3 une nervure cylindrique 22, la fenêtre 19, un ergot 20 et la fenêtre 18.

On aperçoit également à l'examen des figures 2 et 3 que la pièce 10 est munie sur certains secteurs au moins de sa périphérie d'un décrochement vers l'arrière référencé 25. La surface du décrochement 25 est parallèle à la face avant 24 de la pièce 10 et dirigée vers cette face avant. De préférence, le décrochement 25 est muni d'une nervure 26, par exemple de section droite triangulaire, en saillie vers l'avant, qui suit globalement le contour de la pièce conductrice de lumière 10.

Sur la figure 2, on a représenté en traits mixtes interrompus la surface 27, formée par le décrochement, s'étendant transversalement aux faces arrière 23 et avant 24 de la pièce optique 10.

Comme illustré sur la figure 1, le cadre 50 en matériau opaque est muni d'une ouverture 51 dont le contour est complémentaire de celui de la face avant 24 de la pièce conductrice de lumière 10. Ainsi, la partie de la pièce conductrice de lumière 10 située en avant du décrochement 25 peut venir se loger dans la découpe 51 du cadre 50, le décrochement 25 reposant par l'intermédiaire de la nervure 26 sur la face arrière du cadre 50.

La hauteur du décrochement 25 par rapport à la face avant 24 de la pièce 10 ainsi que l'épaisseur du cadre 50 sur la périphérie de la découpe 51 sont adaptées de telle sorte qu'en position assemblée la face avant 24 de la pièce conductrice de lumière 10 et la face avant 52 du cadre opaque 50 soient coplanaires.

La fixation de la pièce conductrice de lumière 10 sur le cadre 50 peut être réalisée à l'aide de tous moyens classiques appropriés, tels que par apport de colle entre la face arrière du cadre 50 et le décrochement 25 ou encore par soudure aux ultrasons.

Le cadre 50 comprend par ailleurs différentes fenêtres 53 en regard desquelles sont placés les témoins lumineux supportés sur la face arrière du cadre 50.

Le cadran 70 présente de préférence un contour identique à celui du cadre 50. Le cadran 70 est destiné à reposer contre la face avant 24 de la pièce conductrice de lumière 10 et la face avant 52 du cadre 50 qui lui est coplanaire. On obtient ainsi une surface support importante pour le cadran 70.

Le cadran 70 possède deux fenêtres généralement rectangulaires 71, 72 homologues des fenêtres 18, 19 réalisées dans la pièce optique et disposées respectivement en regard de celles-ci pour permettre au conducteur d'examiner les roues de l'odomètre général et de l'odomètre partiel respectivement. Le cadran 70 est muni de plus en dessous de la fenêtre 72 d'un orifice 73 disposé en regard d'un alésage 28 ménagé dans la pièce conductrice de lumière 10, et destiné à recevoir un axe assurant la mise à zéro de l'odomètre partiel.

Le cadran 70 est muni enfin d'une pluralité de plages 74 disposées respectivement en regard des fenêtres 53 et de la plage de déplacement de l'aiguille de l'appareil indicateur de vitesse supporté sur la plage A de la pièce conductrice de lumière. Les plages 74 sont de façon classique en soi formées de plages translucides colorées et/ou munies de symboles ou indications numériques associés respectivement aux appareils indicateurs et témoins.

On va maintenant décrire la structure du cavalier 100 représenté sur les figures 6 et 7 et des éléments 14, 15, 16 et 17 associés, venus de moulage sur la face arrière de la pièce conductrice de lumière 10, au niveau dela zone A, pour assurer un ancrage trois points d'un appareil indicateur.

Le cavalier 100 a la forme générale d'un U. Sur la figure 6, on a référencé 102 l'âme du cavalier et 106, 108 les deux ailes de celui-ci.

Les deux ailes 106, 108 sont généralement planes et rectilignes, les surfaces principales de ces ailes, telles que les surfaces 107, 109 visibles sur la figure 6 étant généralement coplanaires deux à deux (soit parallèles au plan de la figure 6 et perpendiculaires au plan de la figure 7).

Par contre, les surfaces principales 103, 104 de l'âme 102 s'étendent perpendiculairement aux surfaces principales 107, 109 des ailes 106, 108. Ainsi, l'homme de l'art comprendra que les ailes 106, 108 du cavalier 100 peuvent fléchir perpendiculairement au plan de la figure 6, alors que l'âme 102 est rigide dans cette direction.

Les extrémités libres 110, 111 des ailes 106 et 108, sont biseautées comme représenté en 112, 113.

Enfin, l'âme 102 est munie à mi-longueur d'une dent 101 en saillie vers l'extérieur du U.

La dent 101 est plus précisément formée sur l'un des bords de l'âme 102 (le bord supérieur selon la représentation de la figure 7).

La dent 101 présente une face d'engagement inclinée 105. La face inclinée 105 est dirigée vers l'extérieur du U en rapprochement du bord de l'âme 102 (inférieur selon la représentation de la figure 7) opposé à celui (supérieur selon la représentation de la figure 7) portant la dent 101.

Les structures 14 prévues en saillie sur la zone A de la pièce 10 pour l'accrochage des extrémités 110, 111 du cavalier 100 sont symétriques par rapport à un plan médian de symétrie de l'élément 15 passant par l'axe de l'orifice 13.

Pour l'essentiel, les structures 14 comprennent au moins une paroi 30 généralement perpendiculaire à la face arrière 23 de la pièce 10, et surmontée par un retour 31 dirigé vers la structure 15 et définissant une surface inférieure 32 dirigée vers la face arrière 23 et sensiblement parallèle à celle-ci. Ladite face 32 sert d'appui aux extrémités 110, 111 des ailes 106, 108 du cavalier 100.

La structure de l'élément 15 est généralement similaire à celle des éléments 14, bien que possédant une hauteur inférieure.

L'élément 15 comprend en effet une paroi 33 généralement perpendiculaire à la face arrière 23 de la pièce 10 et un retour 34 dirigé généralement vers les éléments 14. Le retour 34 possède une surface inférieure 35 dirigée vers la paroi arrière 23 et sensiblement parallèle à celle-ci. La surface inférieure 35 du retour 34 sert d'appui à la surface en décrochement 115 prévue sur la dent 101 du cavalier.

On notera de plus que le retour 15 est muni d'une surface d'engagement inclinée 36 apte à coopérer avec la surface d'engagement inclinée 105 prévue sur la dent 101 pour faciliter la pénétration de cette dernière sous le retour 34.

La surface d'engagement inclinée 36 converge vers la face arrière 23 de la pièce 10 en direction des éléments 14.

L'assemblage d'un appareil indicateur sur la zone A munie des structures 14, 15, 16 et 17 est réalisé comme suit.

Dans un premier temps l'axe de sortie de l'appareil indicateur est engagé dans l'orifice 13, et les ergots ménagés sur l'appareil indicateur sont engagés dans l'espace central des nervures cylindriques 17. Le cas échéant, des manchons souples en caoutchouc ou équivalent peuvent être insérés entre les ergots prévus sur l'appareil indicateur et les nervures cylindriques 17.

L'appareil indicateur repose alors sur la nervure 16.

L'appareil indicateur est ainsi correctement positionné, il reste à l'immobiliser.

Cela est réalisé grâce au cavalier 100.

Les extrémités 110, 111 des ailes du cavalier sont tout d'abord introduites dans les structures 14, sous la surface 32 puis l'âme 102 du cavalier est basculée en rapprochement de la face arrière 23 de la pièce 10 pour loger la dent 101 sous le retour 34 de la structure 15. Cette insertion est facilitée par la coopération des surfaces inclinées 36 et 105. Lorsque le cavalier 100 est ainsi immobilisé dans les structures 14 et 15, des pattes en saillie sur le corps de l'appareil indicatuer sont pincées entre les ailes 106, 108 du cavalier et la face arrière 23 de la pièce 10.

On notera que l'échelle de la figure 4 est différente de l'échelle de la figure 6.

Bien entendu pour permettre d'insérer le cavalier 100 sur les éléments 14 et 15, et d'assurer ultérieurement un maintien sûr du cavalier 100 il est nécessaire que la distance d₁ séparant les structures 14 soit sensiblement égale à l'ouverture o des ailes 106, 108 du cavalier, d'une part, et que la distance séparant les parois 30 et 33 des structures 14 et 15, qui portent les retours 31 et 34, considérée selon une projection dans le plan de symétrie des structures 14 passant par l'axe de l'orifice 13, distance référencée d₂ sur la figure 5, soit sensiblement égale à la hauteur h du cavalier 100 considérée dans la direction d'élongation des ailes 106 et 108, d'autre part.

Plus précisément, les parois 30 des structures 14 et 33 de la structure 15 sont généralement parallèles entre elles et perpendiculaires au plan de symétrie des structures 14 passant par l'axe de l'orifice 13.

Pour assurer un positionnement latéral du cavalier 100 par rapport aux structures 14 et 15, c'est-à-dire un positionnement dans la direction d'élongation de l'âme 102, il est avantageux que les structures 14 possèdent en outre des parois auxiliaires 37. Ces parois auxiliaires 37 sont perpendiculaires à la face arrière 23 de la pièce 10 et s'étendent perpendiculairement aux parois 30 (parallèlement au plan de symétrie des structures 14 passant par l'axe de l'orifice 13) et sur l'extérieur des parois 30.

Les parois auxiliaires 37 servent ainsi de butée latérale aux extrémités 110, 111 des ailes 196, 108 du cavalier 100.

De même, des parois auxiliaires peuvent être prévues de part et d'autre de la paroi 33, au niveau de la structure 15, pour maintenir latéralement la dent 101 prévue sur le cavalier.

On a représenté sur la figure 8 un étrier 200 destiné à définir un ancrage deux points des appareils indicateurs en combinaison avec les structures 21 solidaires de la face arrière 23 de la pièce 10.

L'étrier 200 a la forme générale d'un U dont l'âme est référencée 202 et les ailes sont référencées 204 et 206 sur la figure 8.

Les extrémités libres 208, 210 des ailes sont munies de crochets 212, 214 adaptés pour venir en prise sur des dents 40 ménagées sur les structures 21.

Ces structures comprennent de préférence des parois principales 41 parallèles entre elles et perpendiculaires à la face arrière 23 de la pièce 10 encadrées chacune par deux parois auxiliaires 42 perpendiculaires à la paroi principale 41 et également à la face arrière 23 de la pièce 10. Les dents 40 précitées sont ménagées sur la paroi principale 41 à l'intérieur du canal délimité par les parois 41 et 42. Plus précisément, chacune des dents 40 présente une section droite généralement triangulaire. Les dents 40 sont délimitées par une surface d'engagement 43 inclinée par rapport à la face arrière 23 de la pièce 10, d'autre part une surface 44 de retenue des crochets 212, 214. La surface 44 s'étend en direction dela face arrière 23 de la pièce 10 et parallèlement à cette face.

Pour assembler un appareil indicateur sur la pièce conductrice de lumière 10 à l'aide de l'étrier 200, il convient de procéder comme suit.

Dans un premier temps, l'appareil indicateur est positionné sur la pièce 10 grâce aux tétons 20 et nervures annulaires 22, le cas échéant avec interposition de manchons souples par exemple en caoutchouc.

Dans un second temps, l'étrier 200 est placé sur ledit appareil indicateur et poussé en direction de la pièce conductrice de lumière 10, de telle sorte que les crochets 212, 214 après glissement sur les surfaces d'engagement 43, accompagné d'un fléchissement élastique des ailes 204, 206 de l'étrier reprennent leur position de repos en dessous des surfaces d'appui 44, afin de verrouiller l'étrier 200 et l'appareil indicateur associé en position.

On a représenté sur les figures 10 et 11 une bride 300 conçue pour monter de façon flottante un circuit imprimé 350 (schématiquement illustré sur la figure 11) sur le corps d'un appareil indicateur 355 (également schématiquement illustré sur la figure 11).

Pour l'essentiel, la bride 300 a la forme générale d'un U. Sur la figure 10, I'âme de la bride est référencée 302 tandis que les deux ailes parallèles de la bride sont référencées 304 et 306.

La bride 300 est munie sur la surface interne 308 de son âme 302 d'un téton 310 s'étendant généralement parallèlement aux ailes 304, 306.

Comme cela est représenté sur la figure 11, le téton 310 est destiné à pénétrer dans l'alésage 356 d'une patte 358 solidaire du corps 355 de l'appareil indicateur.

Par ailleurs, les ailes 304, 306 sont munies au niveau de leurs extrémités libres 312, 314 de dents 316, 318.

Ces dents 316, 318 sont destinées à venir en liaison d'encliquetage avec le circuit imprimé 350 comme illustré sur la figure 11.

Plus précisément, les dents 316 et 318 présentent une section droite généralement triangulaire.

Les dents 316, 318 sont délimitées d'une part, par une surface d'engagement 320, 322, d'autre part, par une surface d'appui 324, 326.

Les surfaces d'engagement 320, 322 convergent vers l'extrémité libre des ailes 304, 306, c'est-à-dire en éloignement de l'âme 302. Les surfaces d'appui 324, 326 s'étendent perpendiculairement à la direction d'élongation des ailes 304, 306 et du téton 310, c'est-à-dire parallèlement à la direction d'élongation de l'âme 302.

Le montage d'un circuit imprimé 350 sur le corps 355 d'un appareil indicateur est réalisé comme suit.

Deux brides 300 sont engagées sur des pattes 358 diamètralement opposées, solidaires du corps 355 de l'appareil indicateur. Plus précisément, les tétons 310 des brides 300 sont insérés dans les alésages 356 précités des pattes 358, dans une orientation telle que l'extrémité libre 312, 314 des ailes 304, 306 soit dirigée vers l'arrière de l'appareil indicateur.

Le circuit imprimé 350 est muni d'orifices 352, 354 dont les dimensions sont adaptées pour permettre le passage des dents 316, 318, mais dont l'écartement est tel que les ailes 304, 306 doivent fléchir élastiquement pour autoriser l'insertion simultanée des dents 316, 318 dans les alésages 352, 354.

Il suffit alors de placer ces alésages 352, 354 du circuit imprimé en regard des dents 316, 318 de la bride 300 et de pousser les dents 316, 318 dans les alésages. Dès que les dents 316, 318 ont franchi l'épaisseur du circuit imprimé 350 et que les ailes 304, 306 reprennent élastiquement leur position de repos, le circuit imprimé 350 est verrouillé sur le corps 355 de l'appareil indicateur.

De préférence, avant l'engagement des dents 316, 318 dans les alésages 352, 354, un bloc de mousse 360 est intercalé entre la face arrière 359 de l'appareil indicateur 355 et le circuit imprimé 350. Le bloc de mousse 360 définit ainsi un montage flottant pour le circuit imprimé 350, ce qui permet en particulier d'éviter en toute sécurité une détérioration éventuelle de l'appareil indicateur 355, lors du montage ou ultérieurement à l'utilisation, par exemple à la suite de vibrations du circuit imprimé.

## Revendications

1. Ensemble pour tableaux de bord de véhicules automobiles du type comprenant :
- des appareils indicateurs,
- au moins un cadran (70) comportant des plages translucides colorées et des symboles colorés associés respectivement aux appareils indicateurs,
- au moins une pièce conductrice de lumière (10) intercalée entre les appareils indicateurs et le cadran (70), ladite pièce conductrice de lumière (10) supportant sur sa surface arrière (23) des appareils indicateurs, et
- un cadre (50) en matériau opaque associé à la pièce conductrice de lumière (10),
caractérisé par le fait que :
- la pièce conductrice de lumière (10) est une pièce unique pour tout le tableau de bord et qui supporte la totalité des appareils indicateurs de celui-ci,
- la pièce conductrice de lumière (10) est munie sur une partie au moins de sa périphérie, et sur sa face avant, d'un décrochement (25) vers l'arrière, par l'intermédiaire duquel la pièce (10) repose contre le cadre (50) de telle sorte que les faces avants (24, 52) de la pièce conductrice de lumière (10) et du cadre (50) soient coplanaires,
- la pièce conductrice de lumière (10) est fixée sur le cadre (50) au niveau du décrochement (25).

2. Ensemble pour tableaux de bord de véhicules automobiles selon la revendication 1, caractérisé par le fait que le décrochement (25) est muni d'une nervure (26) de section droite triangulaire en saillie vers l'avant et suivant le contour de la pièce conductrice de lumière (10).

3. Ensemble pour tableaux de bord de véhicules automobiles selon l'une des revendications 1 à 2, caractérisé par le fait que la cadran (70) repose sur les faces avants coplanaires (24, 52) de la pièce conductrice de lumière (10) et du cadre (50).

4. Ensemble pour tableaux de bord de véhicules automobiles selon l'une des revendications 1 à 3, caractérisé par le fait que les appareils indicateurs sont fixés sur la face arrière (23) de la pièce conductrice de lumière (10) à l'aide d'étriers (200) ou cavaliers (100) venant en prise sur des structures en saillie (14, 15; 21), solidaires de ladite face arrière 23.

5. Ensemble pour tableaux de bord de véhicules automobiles, selon l'une des revendications 1 à 4, caractérisé par le fait qu'il comprend de plus des brides en U (300) adaptées pour venir en prise d'une part, avec le corps (355) des appareils indicateurs, d'autre part, avec des circuits imprimés (350) servant à l'alimentation électrique des appareils indicateurs pour définir un montage flottant des circuits (350) sur les appareils indicateurs (355).

6. Ensemble pour tableaux de bord de véhicules automobiles selon la revendication 5, caractérisé par le fait que les brides en U (300) comprennent sur la surface interne (308) de leur âme (302) un téton (310) venant en prise avec le corps (355) des appareils indicateurs, et sur l'extrémité libre (312, 314) de leurs ailes (340, 306) des dents (316, 308) venant en liaison d'encliquetage avec les circuits imprimés (350).

7. Dispositif support d'appareils indicateurs sur la face arrière d'une pièce conductrice de lumière (10) pour ensemble de tableaux de bord de véhicules automobiles, selon l'une des revendications 1 à 6, caractérisé par le fait qu'il comprend en combinaison des structures en saillie (14, 15; 21) solidaires de la face arrière (23) de la pièce conductrice de lumière (10) et des étriers (200) ou cavaliers (100) adaptés pour venir en prise avec lesdites structures.

8. Dispositif support selon la revendication 7, caractérisé par le fait que chaque étrier (200) à la forme d'un U et possède des crochets (212, 214) sur l'extrémité libre de ses ailes (204, 206), adaptés pour venir en prise avec des structures associées (21) solidaires de la face arrière (23) de la pièce conductrice de lumière (10) pour définir un ancrage deux points des appareils indicateurs.

9. Dispositif support selon l'une des revendications 7 ou 8, caractérisé par le fait que chaque cavalier (100) à la forme d'un U adapté pour venir s'accrocher par les extrémités libres de ses ailes (106, 108) sur des structures (14) associées solidaires de la face arrière (23) de la pièce conductrice de lumière (10) et muni d'une dent (101) sur son âme (102), ladite dent (101) étant adaptée pour venir en prise avec une troisième structure (15) pour définir un ancrage trois points des appareils indicateurs.

## Patentansprüche

1. Aufbau für ein Armaturenbrett von Automobilen der Bauart mit:
- Anzeigegeräten,
- mindestens einer Anzeigetafel (70), die lichtdurchlässige farbige Bereiche und jeweils den Anzeigegeräten zugeordnete farbige Symbole aufweist,
- mindestens einem lichtleitenden Teil (10), das zwischen die Anzeigegeräte und die Anzeigetafel (70) eingeschaltet ist, wobei das lichtleitende Teil (10) auf seiner Rückseite (23) Anzeigegeräte trägt, und
- einem Rahmen (50) aus lichtundurchlässigem Material, der dem lichtleitenden Teil (10) zugeordnet ist,
dadurch gekennzeichnet, daß
- das lichtleitende Teil (10) ein einziges Teil für das gesamte Armaturenbrett ist und alle Anzeigegeräte desselben trägt,
- das lichtleitende Teil (10) in mindestens einem Bereich seines Umfangs, und auf seiner Vorderseite, mit einem nach hinten gerichteten Ansatz (25) versehen ist, über welchen das Teil (10) an dem Rahmen (50) anliegt, so daß die Vorderseiten (24, 52) des lichtleitenden Teiles (10) und des Rahmens (50) koplanar sind,
- das lichtleitende Teil (10) auf dem Rahmen (50) auf der Höhe des Ansatzes (25) befestigt ist.

2. Aufbau für Armaturenbretter von Automobilen nach Anspruch 1, dadurch gekennzeichnet, daß der Ansatz (25) mit einer Rippe (26) mit einem Querschnitt in Form eines rechtwinkeligen Dreiecks versehen ist, die nach vorn vorspringt und der Kontur des lichtenden Teiles (10) folgt.

3. Aufbau für Armaturenbretter von Automobilen nach einem der Ansprüche 1 bis 2, dadurch gekennzeichnet, daß die Anzeigetafel (70) an den koplanaren Vorderflächen (24, 52) des lichtleitenden Teiles (10) und des Rahmens (50) anliegt.

4. Aufbau für Armaturenbretter von Automobilen nach einem der Ansprüche 1 bis 3, dadurch gekennzeichnet, daß die Anzeigegeräte auf der Rückseite (23) des lichtleitenden Teiles (10) mit Hilfe von Bügeln (200) oder Klammern (100) befestigt sind, die mit einstückig von der Rückseite (23) vorspringenden Ansätzen (14, 15; 21) in Eingriff stehen.

5. Aufbau für Armaturenbretter von Automobilen nach einem der Ansprüche 1 bis 4, dadurch gekennzeichnet, daß er U-förmige Bügel (300) umfaßt, die dazu dienen, einerseits mit den Körpern (355) der Anzeigegeräte und andererseits mit den gedruckten Schaltungen (350) in Eingriff zu kommen, welche die Anzeigegeräte mit elektrischer Energie versorgen, um eine schwimmende Montage der Schaltung (350) an den Anzeigegeräten (355) zu erreichen.

6. Aufbau für Armaturenbretter von Automobilen nach Anspruch 5, dadurch gekennzeichnet, daß die U-förmigen Bügel (300) auf der Innenseite (308) ihres Mittelsteges (302) einen Ansatz (310), der mit den Körpern (355) der Anzeigegeräte in Eingriff kommt, und an den freien Enden (312, 314) ihrer Schenkel (304, 306) Zähne (316, 318) aufweisen, die in einrastende Verbindung mit den gedruckten Schaltungen (350) kommen.

7. Haltevorrichtung für Anzeigegeräte auf der Rückseite eines lichtleitenden Teiles (10) für den Aufbau von Armaturenbrettern von Automobilen nach einem der Ansprüche 1 bis 6, dadurch gekennzeichnet, daß sie in Kombination Vorsprünge (14, 15; 21), welche einstückig mit der Rückseite (23) des lichtleitenden Teiles (10) sind, und Bügel (200) oder Klammern (100) aufweist, die dazu geeignet sind, in Eingriff mit den genannten Vorsprüngen zu kommen.

8. Haltevorrichtung nach Anspruch 7, dadurch gekennzeichnet, daß jeder Bügel (200) U-förmig ist und Haken (212, 214) an den freien Enden seiner Schenkel (204, 206) aufweist, die dazu geeignet sind, mit den zugehörigen Vorsprüngen (21) an der Rückseite (23) des lichtleitenden Teiles (10) in Eingriff zu kommen, um eine Zweipunkt-Befestigung der Anzeigegeräte zu bewirken.

9. Haltevorrichtung nach einem der Ansprüche 7 oder 8, dadurch gekennzeichnet, daß jede Klammer (100) U-förmig und dazu geeignet ist, mit den freien Enden ihrer Schenkel (106, 108) in die zugehörigen Vorsprünge (14) der Rückseite (23) des lichtleitenden Teiles (10) einzuhaken, und mit einem Zahn (101) an ihrem Mittelsteg (102) versehen ist, wobei der Zahn (101) dazu geeignet ist, mit einem dritten Ansatz (15) in Eingriff zu kommen, um eine Dreipunkt-Befestigung der Anzeigegeräte festzulegen.

## Claims

1. Unit for motor vehicle instrument panels, of the type comprising:
- indicating apparatus,
- at least one dial (70) having translucent coloured areas and coloured symbols respectively associated with the indicating apparatus,
- at least one light-conducting piece (10) placed between the indicating apparatus and the dial (70), the said light-conducting piece (10) supporting on its rear face (23) indicating apparatus, and
- a frame (50) of opaque material associated with the light-conducting piece (10),
characterized in that:
- the light-conducting piece (10) is a single piece for the entire instrument panel and supports all the indicating apparatus thereof,
- the light-conducting piece (10) is equipped on at least a portion of its periphery and on its front face with a backward recess (25) by means of which the piece (10) rests against the frame (50) such that the front faces (24, 52) of the light-conducting piece (10) and of the frame (50) are coplanar,
- the light-conducting piece (10) is fixed on the frame (50) at the location of the recess (25).

2. Unit for motor vehicle instrument panels according to Claim 1, characterized in that the recess (25) is equipped with a rib (26) of triangular cross section projecting forward and following the contour of the light-conducting piece (10).

3. Unit for motor vehicle instrument panels according to one of Claims 1 to 2, characterized in that the dial (70) rests on the coplanar front faces (24, 52) of the light-conducting piece (10) and the frame (50).

4. Unit for motor vehicle instrument panels according to one of Claims 1 to 3, characterized in that the indicating apparatus are fixed on the rear face (23) of the light-conducting piece (10) by means of hoops (200) or brackets (100) engaging on projecting structures (14, 15; 21) integral with the said rear face 23.

5. Unit for motor vehicle instrument panels according to one of Claims 1 to 4, characterized in that it furthermore comprises U-shaped straps (300) adapted to engage on the one hand with the body (355) of the indicating apparatus and on the other hand with printed circuits (350) serving to supply electricity to the indicating apparatus to define a floating mounting of the circuits (350) on the indicating apparatus (355).

6. Unit for motor vehicle instrument panels according to Claim 5, characterized in that the U-shaped straps (300) have on the internal surface (308) of their central part (302) a lug (310) engaging with the body (355) of the indicating apparatus, and have on the free end (312, 314) of their arms (340, 306) teeth (316, 308) connecting in latching manner the printed circuits (350).

7. Support device for indicating apparatus on the rear face of a light-conducting piece (10) for a motor vehicle instrument panel unit according to one of Claims 1 to 6, characterized in that it comprises in combination projecting structures (14, 15; 21) integral with the rear face (23) of the light-conducting piece (10) and hoops (200) or brackets (100) adapted to engage with the said structures.

8. Support device according to Claim 7, characterized in that each hoop (200) has the shape of a U and possesses hooks (212, 214) at the free end of its arms (204, 206) which are adapted to engage with associated structures (21) integral with the rear face (23) of the light-conducting piece (10) to define a two-point anchoring of the indicating apparatus.

9. Support device according to one of Claims 7 or 8, characterized in that each bracket (100) has the shape of a U adapted to hook, by means of the free ends of its arms (106, 108), onto associated structures (14) integral with the rear face (23) of the light-conducting piece (10) and provided with a tooth (101) on its central part (102), the said tooth (101) being adapted to engage with a third structure (15) to define a three-point anchoring of the indicating apparatus.
